# EUROPÄISCHE PATENTSCHRIFT

(11) **EP 0 767 721 B1**
(45) Veröffentlichungstag und Bekanntmachung des Hinweises auf die Patenterteilung: **24.02.1999**
(21) Anmeldenummer: 95924296.7
(22) Anmeldetag: 20.06.1995
(51) Int. Cl.: B23Q 7/14, B23Q 7/04

(54) **BEARBEITUNGSZENTRUM**
MACHINING CENTRE
CENTRE D'USINAGE

(30) Priorität: 29.06.1994 DE 4422416
(43) Veröffentlichungstag der Anmeldung: 16.04.1997
(73) Patentinhaber: Grüner, Magnus, 73337 Bad Überkingen (DE)
(72) Erfinder: Grüner, Magnus, 73337 Bad Überkingen (DE)
(74) Vertreter: Abel, Martin, Dipl.-Ing.
(86) Internationale Anmeldenummer: EP9502385
(87) Internationale Veröffentlichungsnummer: WO9600633

(56) Entgegenhaltungen:
- EP-A- 0 088 645
- EP-A- 0 117 557
- EP-A- 0 219 107
- EP-A- 0 231 827
- DE-A- 3 416 660
- DE-A- 4 022 458
- DE-A- 4 212 175
- US-A- 3 543 392
- DATABASE WPI Week 8605 15.Februar 1986 Derwent Publications Ltd., London, GB; AN 86-024505 & SU-A-1 166 965 (ODESS SPEC TOOLS) , 15.Juli 1985

## Beschreibung

Die Erfindung betrifft ein Bearbeitungszentrum zur mechanischen Bearbeitung von Werkstücken, mit mindestens einer Arbeitseinheit, die mindestens eine zu einer Rotationsbewegung antreibbare Arbeitsspindel aufweist, die mit einem Bearbeitungswerkzeug bestückbar ist, mit dem mindestens ein in einer Bearbeitungszone angeordnetes Werkstück bearbeitet werden kann, mit einem Werkstücktrager, der eine Spannvorrichtung zum losbaren Festspannen des Werkstückes aufweist, wobei die Arbeitseinheit und der Werkstücktrager relativ zueinander verfahrbar sind, mit einer Förder- und Positioniereinrichtung für den Werkstückträger, durch die der Werkstückträger zwischen der Bearbeitungszone und einer außerhalb der Bearbeitungszone befindlichen Werkstück-Wechselstation verfahrbar ist, und mit einem Greifer für den Wechsel von zu bearbeitenden und bereits bearbeiteten Werkstücken, wobei der Greifer das Werkstück von oben oder von der Seite her aufnimmt, hochhebt und in die Bearbeitungszone fördert und nach der Bearbeitung an einem Werkstück-Ablageplatz in der Werkstück-Wechselstation von oben oder von der Seite her absetzt, wobei die Spannvorrichtung des Werkstückträgers den Greifer bildet und das Werkstück in Bearbeitungseingriff bringt, und wobei das jeweils zu bearbeitende Werkstück von der Aufnahme bis zum erneuten Absetzen in der Werkstückwechselstation, und somit auch während der dazwischenliegenden Bearbeitung durch das an der mindestens einen rotierenden Arbeitsspindel der Arbeitseinheit angeordnete Bearbeitungswerkzeug, ständig an der Spannvorrichtung verbleibt.

Ein Bearbeitungszentrum dieser Art geht aus der DE-A-42 12 175 hervor. Sie umfaßt einen mit einer Motorspindel verbundenen Werkstückträger, der von einer Spannvorrichtung in Gestalt eines Spannfutters gebildet ist. Das Spannfutter arbeitet als Greifer, der im Pick-up-System zu bearbeitende Werkstücke aufnehmen und fertig bearbeitete Werkstücke ablegen kann. Ferner ist der Greifer in der Lage, das gehaltene Werkstück in Bearbeitungseingriff mit einem einen Eigenantrieb aufweisenden Bearbeitungswerkzeug zu bringen. Eine wechselnde Bearbeitung unterschiedlicher Werkstücke ist allerdings nicht ohne weiteres möglich.

Ein ähnliches Bearbeitungszentrum ist bei der in der EP 0 088 645 A1 beschriebenen spanabhebenden Werkzeugmaschine verwirklicht. Diese verfügt zusätzlich über weitere Maschinenteile, die einen Einsatz als Vertikaldrehmaschine mit rotierendem Werkstück und stationärem Werkzeug ermöglichen. Soweit das Bearbeitungszentrum betroffen ist, umfaßt die bekannte Maschine einen von einem Teilkopf gebildeten Werkstückträger und eine neben diesem angeordnete, von einem Magazin gebildete Werkstück-Wechselstation. Ein Greifer setzt die unbearbeiteten und bearbeiteten Werkstücke zwischen der Werkstück-Wechselstation und dem Werkstückträger um. Das Bearbeitungswerkzeug ist an der rotierenden Arbeitsspindel einer Arbeitseinheit gespannt.

Während der Werkstückbearbeitung nimmt der Greifer eine Bereit-schaftsstellung außerhalb der Bearbeitungszone ein. Er muß daher bei jedem Werkstückwechsel unmittelbar vor und nach dem Bearbeitungseingriff des Bearbeitungswerkzeuges zwischen der Bereitschaftsstellung und der Bearbeitungszone verfahren wer den. Der dafür notwendige Zeitaufwand wirkt sich negativ auf die Werkstück-Umrüstzeiten und somit die gesamten Werkstück-Bearbeitungszeiten aus. Außerdem ist es relativ umständlich, den ständig in der Bearbeitungszone verbleibenden Werkstückträger von Spänen zu reinigen, was ebenfalls in einem erhöhten Zeitaufwand resultiert.

Es ist daher die Aufgabe der vorliegenden Erfindung, ein Bearbeitungszentrum der eingangs genannten Art zu schaffen, das bei verringertem baulichem Aufwand kürzere Werkstück-Bearbeitungszeiten und eine vereinfachte Späneentsorgung ermöglicht.

Zur Lösung dieser Aufgabe ist vorgesehen, daß der Werkstückträger eine Palette enthält, an der die Spannvorrichtung vorgesehen ist, daß der Werkstückträger gemeinsam mit der Spannvorrichtung auswechselbar an der Positioniereinrichtung angeordnet ist, und daß eine Werkstückträger-Wechselstation vorhanden ist, in der die Positioniereinrichtung den für einen Bearbeitungsvorgang benötigten Werkstückträger von einer Zuführeinrichtung aufnimmt.

Auf diese Weise hat die Spannvorrichtung weiterhin eine Doppelfunktion, indem sie sowohl zur Handhabung beim Fördern der Werkstücke in die und aus der Bearbeitungszone und zum andern zum Festhalten des Werkstückes während der Bearbeitung dient. Die Spannvorrichtung ist an einer Palette des Werkstückträgers angeordnet, über die die Verbindung zur Positioniereinrichtung hergestellt wird. Um eine rasche Umrüstung des Bearbeitungszentrums auf andere Werkstücke zu ermöglichen, ist der Werkstückträger auswechselbar an der Positioniereinrichtung angeordnet. Er läßt sich gemeinsam mit der an ihm vorgesehenen Spannvorrichtung austauschen und durch einen Werkstückträger mit anders gestalteter Spannvorrichtung ersetzen. Der Wechsel der Werkstückträger erfolgt in einer Werkstückträger-Wechselstation, in der die Positioniereinrichtung den als nächstes benötigten Werkstückträger von einer Zuführeinrichtung aufnehmen kann.

Zwar wird in der Werkzeugmaschine gemäß EP 0 088 645 A1 bei einem Einsatz als Vertikaldrehmaschine das jeweils zu bearbeitende Werkstück von dem Spannfutter selbst aus dem Werkstückmagazin geholt und nach der Bearbeitung wieder zurückgesetzt. Diese Anwendung beschränkt sich jedoch auf den Drehbetrieb bei rotierendem Spannfutter und feststehendem Werkzeug. Bei einem Einsatz als Bearbeitungszentrum der eingangs genannten Art wird auf einen zusätzlichen Greifer zum Umsetzen der Werkstücke zurückgegriffen.

Entsprechendes gilt auch für die aus der DE 40 22 458 A1 bekannte Werkzeugmaschine. Dort sitzt der im Betrieb rotierende Werkstückträger unterhalb des stationären Bearbeitungswerkzeuges und wird mit Hilfe eines Greifers bestückt. Die Bestückungszeit ist zwar kürzer als im Falle der EP 0 088 645 A1, da zwei Greifer vorhanden sind. Der hierfür erforderliche höhere maschinentechnische Aufwand führt allerdings zu einer nicht unbeträchtlichen Verteuerung der Werkzeugmaschine.

Auch in der DE 34 16 660 A1 wird bereits vorgeschlagen, die Werkstücke in einer einzigen Aufspannung aus dem Werkstückmagazin zuholen, zu bearbeiten und zurückzusetzen. Wiederum handelt es sich hier allerdings lediglich um eine Drehmaschine, die die Werkstücke mit dem mit der Arbeitsspindel verbundenen Spannfutter ergreift. Zudem ist bei dieser Drehmaschine die Möglichkeit des Austauches eines für die Bearbeitungszentren erforderlichen Werkstückträgers gemeinsam mit der Spannvorrichtung nicht vorgesehen.

Die Ausgestaltung von Werkstückträgern als Palette mit daran festgelegter Spannvorrichtung wird bei Bearbeitungszentren zwar auch schon eingesetzt, was durch die US-A-3 543 392 belegt wird. Allerdings handelt es sich dort um eine konventionelle Handhabung, wobei jedem Werkstück ein eigener Werkstückträger zugeordnet ist, an dem es ständig verbleibt, so daß sich keine Greiferfunktion ergibt. Aufgrund der großen Anzahl erforderlicher Werkstückträger erfordert dieses Bearbeitungszentrum zudem einen hohen Investitionsaufwand.

Vorteilhafte Weiterbildungen der Erfindung sind in den Unteransprüchen aufgeführt.

Der in der Werkstückwechselstation vorhandene Werkstück-Bereitstellungsplatz, von dem der Werkstückträger das jeweils zu bearbeitende Werkstück entnimmt, kann mit dem Werkstück-Ablageplatz identisch sein.

Um eine optimale Spanabfuhr zu erhalten befindet sich unterhalb der Bearbeitungszone zweckmäßigerweise ein Späneauffangschacht, der in eine Fördereinrichtung münden kann, die die anfallenden Späne abtransportiert.

Die mindestens eine vorhandene Arbeitseinheit kann in einspindliger oder in mehrspindliger Ausführungsform vorgesehen sein. Die einspindlige Ausführungsform kommt vor allem bei Hochgeschwindigkeitsbearbeitung zum Einsatz, wobei man vorzugsweise auf eine Lösung zurückgreift, bei der Spindel und Motor zu einer Einheit zusammengefaßt sind. Vor allem bei einspindliger Ausführungsform kann es sich empfehlen, mehrere und vorzugsweise zwei derartige Arbeitseinheiten gleichzeitig vorzusehen, die insbesondere in einer Horizontalebene nebeneinander angeordnet sind und unabhängig voneinander arbeiten. So kann zum Beispiel die eine Arbeitseinheit einen Bearbeitungsvorgang durchführen, während bezüglich der momentan nicht in Betrieb befindlichen Arbeitseinheit ein Werkzeugwechsel stattfindet.

Um die Umrüstung zu erleichtern, empfiehlt sich die Ausrüstung mit einer Werkstückträger-Wechselvorrichtung, der ein Werkstückträger-Magazin zugeordnet ist. Das Auswechseln der Werkstückträger zwischen der Werkstückträger-Wechselvorrichtung und dem Werkstückträger-Magazin kann zum Beispiel von Hand oder mit einer geeigneten Hilfseinrichtung erfolgen.

Eine bevorzugte Ausführungsform sieht vor, den Werkstückträger an einer auslegerartigen Partie der Positioniereinrichtung anzuordnen, um möglichst viel Bewegungsspielraum für den Werkstückträger zu bieten.

Nachfolgend wird die Erfindung anhand der beiliegenden Zeichnung näher erläutert. In dieser zeigen:
- Figur 1: eine Vorderansicht einer bevorzugten Bauform des Bearbeitungszentrums mit Blickrichtung gemäß Pfeil I aus Figur 2,
- Figur 2: eine Draufsicht auf das Bearbeitungszentrum mit Blickrichtung gemäß Pfeil II aus Figur 1,
- Figur 3: eine Seitenansicht des Bearbeitungszentrums mit Blickrichtung gemäß Pfeil III aus Figur 1,
- Figur 4: die in Figuren 1 bis 3 der Übersichtlichkeit halber nicht oder nur schematisch dargestellte Werkstückträger-Wechselvorrichtung in einer ausschnittsweisen Seitenansicht mit Blickrichtung gemäß Pfeil III,
- Figur 5: eine Draufsicht gemäß Pfeil V auf die Anordnung der Figur 4,
- Figur 6: eine verkleinerte Draufsicht auf eine weitere Ausführungsform des Bearbeitungszentrums,
- Figur 7: eine besondere Anordnung des Werkstückträgers, und
- Figur 8: eine weitere Modifikation des Bearbeitungszentrums.

Alle Abbildungen sind schematisch gehalten. Es wurde insbesondere auf die Darstellung der erforderlichen Antriebs- und Steuermittel verzichtet, die als solches bekannt sind und vom Fachmann nach Bedarf eingesetzt werden können.

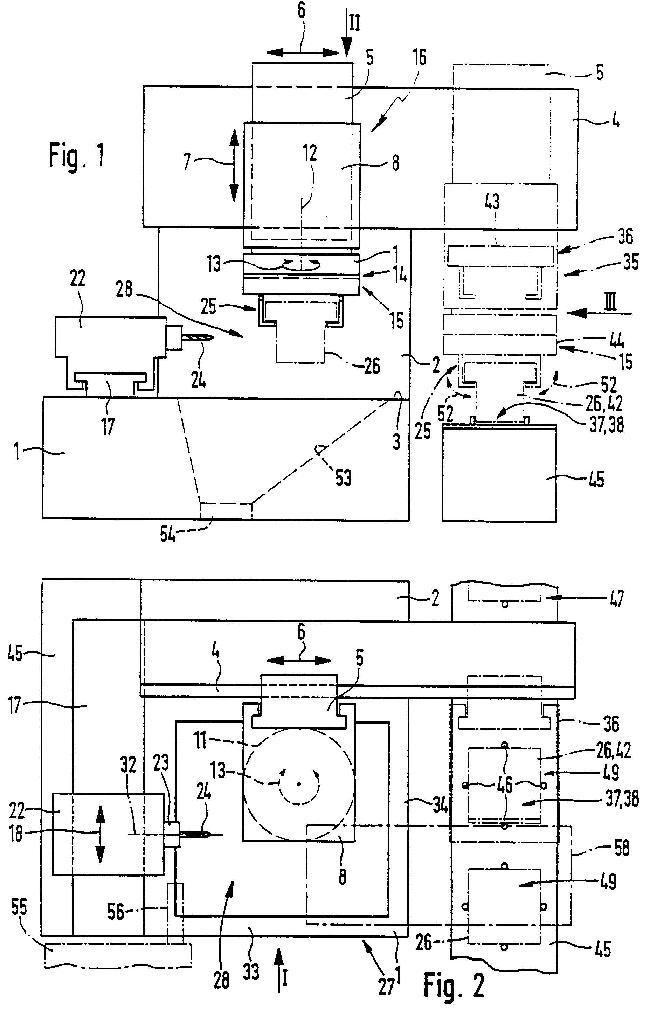

Das aus Figuren 1 bis 5 hervorgehende Bearbeitungszentrum besitzt einen Tisch oder Sockel 1, im Bereich dessen Rückseite ein nach oben ragender Träger 2 vorgesehen ist. Im oberen Bereich des Trägers 2 und mit vertikalem Abstand zur Sockeloberseite 3 ist eine zum Beispiel schienenartige erste Horizontalführung 4 vorgesehen. An ihr ist eine Vertikalführung 5 horizontal linear beweglich gelagert, die entsprechende erste horizontale Bewegungsrichtung ist durch Doppelpfeil 6 gekennzeichnet.

An der Vertikalführung 5 sitzt ein gemäß Doppelpfeil 7 in einer vertikalen Bewegungsrichtung bewegbar geführter Hubschlitten 8.

An der Unterseite des Hubschlittens 8 ist ein Drehteller 11 angeordnet. Er ist um eine vertikale Achse 12 relativ zu dem Hubschlitten 8 verdrehbar. Die Drehrichtung ist durch Doppelpfeil 13 verdeutlicht.

An dem Drehteller 11, vorliegend an seiner Unterseite, ist über eine Kupplungseinrichtung 14 ein Werkstückträger 15 lösbar festgelegt. Der Drehteller 11, der Hubschlitten 8, die Vertikalführung 5 und die erste Horizontalführung 4 bilden eine allgemein mit 16 bezeichnete Positioniereinrichtung für den angekuppelten Werkstückträger 15. Dieser läßt sich somit gemäß den Bewegungsrichtungen 6, 7 und 13 bedarfsgemäß bewegen, um in eine gewünschte Position verbracht zu werden.

An dem Sockel 1 ist im Bereich der Sockeloberseite 3 eine zweite Horizontalführung 17 vorgesehen. Sie erstreckt sich, in vertikaler Draufsicht gesehen, im rechten Winkel zu der ersten Horizontalführung 4. An ihr sitzt eine in ihrer Längsrichtung gemäß Doppelpfeil 18 in einer zweiten horizontalen Bewegungsrichtung hin und her verfahrbare Arbeitseinheit 22. Beispielsgemäß handelt es sich um eine einspindlige Arbeitseinheit, die über eine Arbeitsspindel 23 verfügt, an der ein gewünschtes Bearbeitungswerkzeug 24 lösbar festlegbar ist. Mittels eines nicht dargestellten und in die Arbeitseinheit 22 integrierten Antriebsmotors läßt sich die Arbeitsspindel 23 und damit das Bearbeitungswerkzeug 24 in an sich bekannter Weise zu einer Rotationsbewegung antreiben. Die Motorauslegung ermöglicht vorliegend eine Hochgeschwindigkeitsbearbeitung.

An die Stelle der einspindligen Arbeitseinheit 22 kann auch eine Mehrspindel-Arbeitseinheit treten, die gleichzeitig mit mehreren rotationsangetriebenen Bearbeitungswerkzeugen bestückbar ist.

An dem Werkstückträger 15 ist eine Spannvorrichtung 25 angeordnet, so daß sich an dem Werkstückträger 15 ein zu bearbeitendes Werkstück 26 lösbar und in einer vorbestimmten Position festspannen läßt. Diese Position sei als Trägerstellung bezeichnet. Die oben erwähnten Bewegungsfreiheitsgrade 6, 7, 13, 18 ermöglichen Relativbewegungen zwischen dem Bearbeitungswerkzeug 24 und dem in Trägerstellung befindlichen Werkstück 26, so daß letzteres beliebig bearbeitet werden kann, indem das Bearbeitungswerkzeug 24 in erforderlicher Weise mit ihm in Eingriff gebracht wird.

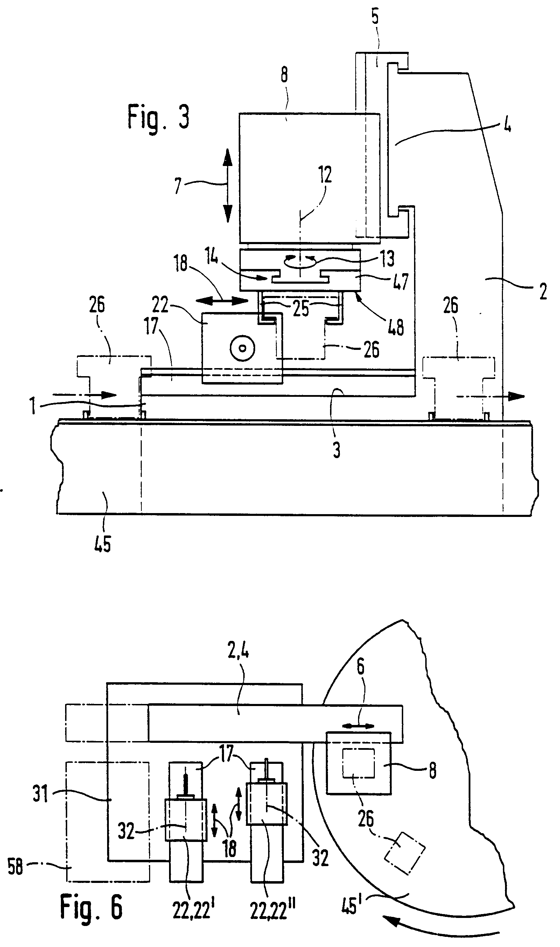

Die Vertikalführung 5 und der Hubschlitten 8 sind von vorne her an die erste Horizontalführung 4 angesetzt, so daß der Hubschlitten 8 zusammen mit dem vorzugsweise angebrachten Drehteller 11 nach Art eines Auslegers nach vorne ragt (Figur 3). Dadurch wird der Werkstückträger 15 mit dem in Trägerstellung befindlichen Werkstück 26 mit Abstand oberhalb der Sockeloberseite 3 und vor dem Träger 2 gehalten. Von der Vorderseite 27 her ist der oberhalb des Sockels 1 befindliche Bereich, der die Bearbeitungszone 28 darstellt, somit im wesentlichen frei zugänglich und einsehbar.

Beispielsgemäß ist die Anordnung so getroffen, daß die erste horizontale Bewegungsrichtung 6 in Breitenrichtung des Sockels 1 und somit in Figur 2 von links nach rechts verläuft. Die zweite horizontale Bewegungsrichtung 18 verläuft in Tiefenrichtung des Sockels 1 zwischen der Vorderseite und der Rückseite. Beispielsgemäß ist die zweite Horizontalführung 17 im linken Randbereich des Sockels 1 angeordnet und die Drehachse 32 der Arbeitsspindel 23 verläuft parallel zur ersten horizontalen Bewegungsrichtung 6. Die Bearbeitungszone 28 wird, in Draufsicht gemäß Figur 2 gesehen, von der ersten und der zweiten Horizontalführung 4, 17, sowie dem vorderen und dem rechten Seitenrand 33, 34 des Sockels 1 eingerahmt.

Die Positioniereinrichtung 16 dient nicht nur zur Positionierung des Werkstückes 26 während der Bearbeitung, sondern auch zum Verlagern des angekuppelten Werkstückträgers 15 zwischen der erwähnten Bearbeitungszone 28 und einer Werkstück-Wechselstation 35. Letztere befindet sich vorzugsweise außerhalb der Bearbeitungszone 28 und liegt beim Ausführungsbeispiel, in Draufsicht gemäß Figur 2 gesehen, seitlich neben dem rechten Seitenrand 34. In der Werkstück-Wechselstation 35 ist ein Werkstückwechsel bezüglich des Werkstückträgers 15 möglich, d.h. das zuvor in Trägerstellung befindliche Werkstück wird nach der Bearbeitung durch das nächste zu bearbeitende Werkstück ersetzt. Es findet ein Werkstückaustausch statt.

Die erste Horizontalführung 4 erstreckt sich seitlich über den rechten Seitenrand 34 hinaus, so daß die Vertikalführung 5 mit dem Werkstückträger 15 längs dieser ersten Horizontalführung 4 in die Werkstück-Wechselstation 35 verfahrbar ist. Die in der Werkstück-Wechselstation 35 eingenommene Werkstück-Wechselstellung ist in Figuren 1 und 2 strichpunktiert bei 36 angedeutet.

In der Werkstück-Wechselstellung 36 nimmt der Werkstückträger 15 eine Stellung vertikal oberhalb eines in der Werkstück-Wechselstation 35 vorgesehenen Werkstück-Bereitstellungsplatzes 37 ein. Um den unbestückten Werkstückträger 15 mit einem Werkstück 26 zu bestücken, wird das entsprechende Werkstück 26 in einer Bereitstellungsposition 42 an dem Werkstück-Bereitstellungsplatz 37 angeordnet. Anschließend fährt der in Werkstück-Wechselstellung 36 befindliche Werkstückträger 15 aus einer mit Abstand oberhalb des Werkstückes 26 liegenden Bereitschaftsposition 43 in vertikaler Bewegungsrichtung 7 nach unten in eine Aufnahmeposition 44, in der er das Werkstück 26 mit seiner Spannvorrichtung 25 ergreift und festspannt. Die Aufnahme des Werkstückes 26 geschieht also von oben her und unmittelbar durch die Spannvorrichtung 25, die somit gleichzeitig eine Greiferfunktion hat. In der Position, in der die Spannvorrichtung 25 das Werkstück 26 aus der Bereitstellungsposition 42 übernimmt, bleibt das Werkstück 26 am Werkstückträger 15 festgespannt, bis es nach erfolgter Bearbeitung wieder in der Werkstückwechselstation 35 abgelegt wird. Das in der Bereitstellungsposition 42 gespannte Werkstück 26 wird durch vertikales Anheben des Hubschlittens 8 vom Werkstück-Bereitstellungsplatz 37 angehoben und nimmt fortan eine Hängeposition am Werkstückträger 15 bis zur Rückgabe in die Werkstück-Wechselstation 35 ein.

Die Rückgabe erfolgt in umgekehrter Bewegungsabfolge, wobei der Werkstückträger 15 zunächst wieder in die Werkstück-Wechselstellung 36 gebracht wird, so daß er sich in einer auf einem höheren Niveau liegenden Bereitschaftsposition 43 mit Abstand oberhalb eines Werkstück-Ablageplatzes 38 der Werkstückwechselstation 35 befindet. Dieser Werkstück-Ablageplatz 38 ist zweckmäßigerweise mit dem Werkstück-Bereitstellungsplatz 37 identisch, so daß das bearbeitete Werkstück durch Absenken des Werkstückträgers 15 wieder in einer der vorangegangenen Bereitstellungsposition 42 entsprechenden Position abgelegt wird.

Es versteht sich, daß der Werkstück-Ablageplatz 38 nicht notwendigerweise mit dem Werkstück-Bereitstellungsplatz 37 identisch sein muß. Vor allem bei kontinuierlicher Zuführung von Werkstükken 26 und wenn der Werkstück-Bereitstellungsplatz 37 während der Bearbeitung des dort abgeholten Werkstückes nicht ständig freigehalten werden kann, ist es empfehlenswert, einen anderen Werkstück-Ablageplatz 38 zu wählen. Dieser befindet sich dann zweckmäßigerweise seitlich neben dem Werkstück-Bereitstellungsplatz 37 oder aber, bei entsprechender Verlängerung der ersten Horizontalführung 4, im Bereich des linken Seitenrandes 45 des Sockels 1. Hieraus wird deutlich, daß die Werkstück-Wechselstation 35 nicht notwendigerweise eine bauliche Einheit sein muß, sondern durchaus in mehrere, örtlich voneinander getrennte Stationsteile unterteilt sein kann. Im einen Stationsteil kann dann beispielsweise die Werkstückaufnahme erfolgen, was man als "Pick-up"-Funktion bezeichnen könnte, während im anderen Stationsteil die Abgabe des bearbeitenden Werkstückes erfolgt.

Das Verbringen der zu bearbeitenden Werkstücke 26 zu dem Werkstück-Bereitstellungsplatz 37 erfolgt zweckmäßigerweise mit Hilfe einer Werkstück-Fördereinrichtung 45, die bei der Ausführungsform gemäß Figuren 1 bis 5 nach Art eines Förderbandes ausgebildet ist, das die Werkstück-Wechselstation 35 durchläuft und das Bearbeitungszentrum seitlich neben dem rechten Seitenrand 34 passiert. Es ist möglich, mehrere der Berarbeitungszentren in Tiefenrichtung hintereinander anzuordnen, so daß das Förderband an allen Bearbeitungszentren vorbeiläuft und die zu bearbeitenden Werkstücke von Fall zu Fall vom jeweiligen Bearbeitungszentrum entnommen werden. Die Werkstück-Fördereinrichtung 45 kann in diesem Falle praktisch einen kostengünstigen Werkstück-Speicher darstellen, der ohne aufwendige, mit Spannvorrichtungen ausgestattete Werkstückpaletten auskommt.

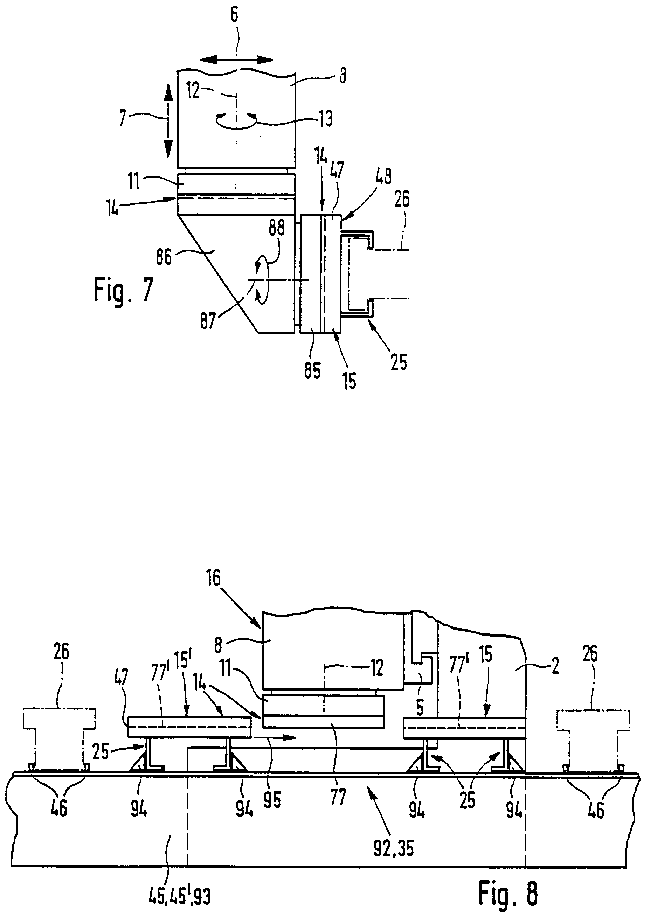

Bei der Ausführungsform gemäß Figur 6 ist eine nach Art eines Rundschalttisches ausgebildete Werkstück-Fördereinrichtung 45' vorgesehen, wobei die Werkstücke 26 auf einem Drehteller angeordnet sein können und die Werkstück-Wechselstation 35 nacheinander durchlaufen.

Um eine zuverlässige Übernahme der Werkstücke 26 durch den Werkstückträger 15 in der Werkstück-Wechselstation 35 zu gewährleisten, empfiehlt es sich, das jeweils am Werkstück-Bereitstellungsplatz 37 befindliche Werkstück 26 durch Positioniermittel 46 in einer vorbestimmten Ausrichtung bereitzustellen. Es kann sich hierbei um Positionierstifte handeln, die eine gewisse Winkelausrichtung des Werkstückes 26 vorgeben. Werden die Werkstücke 26 mittels einer Werkstück-Fördereinrichtung 45, 45' zugeführt, sind zweckmäßigerweise an jedem Werkstückplatz 49 entsprechende Positioniermittel 46 vorhanden.

Bei dem bevorzugten Ausführungsbeispiel umfaßt der Werkstückträger 15 eine als Aufspannplatte 47 bezeichnete Grundplatte, die mit ihrer Oberseite voraus an den Drehteller 11 fest gekuppelt ist, wobei die Plattenebene rechtwinkelig zu der vertikalen Drehachse 12 verläuft. Die Spannvorrichtung 25 ist an der in der gekuppelten Stellung nach unten weisenden unteren Plattenfläche 48 vorgesehen. Diese Stellung nimmt der Werkstückträger 15 auch in der Werkstück-Wechselstellung 36 ein, so daß zum Aufnehmen eines Werkstückes 26 eine Vertikalbewegung genügt, wobei die Spannvorrichtung 25 von oben her an das am Werkstück-Bereitstellungplatz 37 positionierte Werkstück 26 angesetzt wird Die Spannvorrichtung 25 selbst kann auf an sich bekannte Weise mit geeigneten, zum Beispiel hydraulischen Spannmechanismen ausgestattet sein und die erforderlichen Spann- und Anlageflächen erhalten, so daß das Ergreifen und Aufspannen des Werkstückes 26 im Rahmen des automatischen Betriebes des Bearbeitungszentrums erfolgen kann. Die erforderlichen Spann- bzw. Greifbewegungen sind in Figur 1 durch die Doppelpfeile 52 angedeutet.

Da das Werkstück 26 in der Bearbeitungszone 28 hängend bearbeitet wird, fallen die entstehenden Späne zum allergrößten Teil nach unten, so daß sie die Spannvorrichtung 25 nicht verschmutzen. Die Späne werden beim Ausführungsbeispiel in einem Späneauffangschacht 53 aufgefangen, der sich unterhalb der Bearbeitungszone 28 befindet und zweckmäßigerweise in den Sockel 1 integriert ist. Der Späneauffangschacht 53 kann sich nach unten hin trichterförmig verjüngen und in eine zum Beispiel von einem Förderband gebildete Fördereinrichtung 54 münden, die horizontal verläuft und die anfallenden Späne vom Bearbeitungszentrum abführt.

Dem Bearbeitungszentrum kann ferner ein Werkzeugspeicher 55 zugeordnet sein, der eine Vielzahl von Bearbeitungswerkzeugen bereithält, mit denen die Arbeitseinheit 22 wahlweise bestückbar ist. Das Bestücken selbst erfolgt dann zweckmäßigerweise mit Hilfe eines geeigneten Werkzeugwechslers 56.

Aus der Ausführungsform gemäß Figur 6 wird deutlich, daß das Bearbeitungszentrum ohne weiteres mit mehreren Arbeitseinheiten 22 ausgestattet sein kann. Gemäß Figur 6 sind zwei solcher Arbeitseinheiten 22', 22'' vorgesehen, die jeweils an einer zweiten Horizontalführung 17 entsprechend dem Ausführungsbeispiel der Figuren 1 bis 5 gemäß Doppelpfeil 18 verlagerbar sind. Sie sind in diesem Falle allerdings im Bereich der Vorderseite 37 des Sokkels 1 angeordnet, so daß sie dem Träger 2 in Tiefenrichtung des Sockels 1 gegenüberliegen. Die Drehachsen der auch hier jeweils einspindligen Arbeitseinheiten 22', 22'' verlaufen im Gegensatz zur Bauform gemäß Figuren 1 bis 5 parallel zur zweiten horizontalen Bewegungsrichtung 18.

Das beispielsgemäße Bearbeitungszentrum ist mit lediglich einem einzigen Werkstückträger 15 ausgestattet, der nacheinander mit den zu bearbeitenden Werkstücken 26 bestückt wird. Da der Werkstückwechsel wegen der in Vertikalrichtung erfolgenden Aufnahme und Abgabe des Werkstückes durch die Spannvorrichtung 25 selbst und automatisch durchgeführt werden kann, sind die Werkstückwechselzeiten äußerst kurz, so daß auf einen weiteren Werkstückträger und ein abwechselndes Verlagern in die Bearbeitungszone verzichtet werden kann. Dies führt zu einer Kostenreduzierung, da pro Werkstücktyp nur ein einziger Werkstückträger benötigt wird.

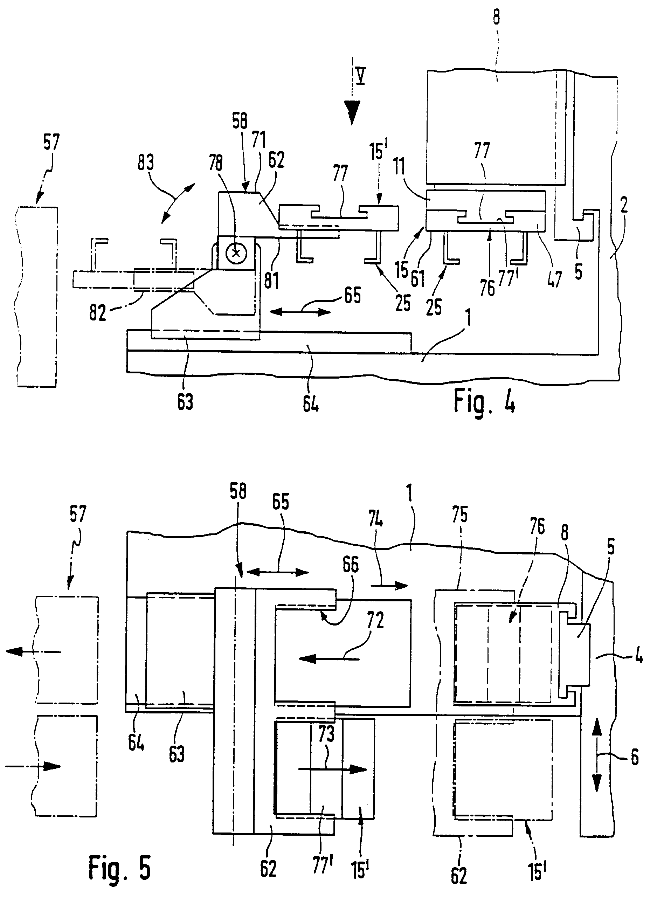

Von Vorteil ist es allerdings, wenn der Werkstückträger 15 des Bearbeitungszentrums auswechselbar ist. Dies ermöglicht einen Austausch zur Umrüstung des Bearbeitungszentrums auf einen anderen zu bearbeitenden Werkstücktyp. Der Werkstückträger 15 ist daher beim Ausführungsbeispiel über die Kupplungseinrichtung 14 lösbar an dem Drehteller 11 fixiert und kann bei Bedarf durch einen anderen Werkstückträger 15' ausgetauscht werden, der eine an andere Werkstücke angepaßte Spannvorrichtung aufweist. Im einzelnen geht dies aus Figuren 4 und 5 hervor.

Demnach ist das Bearbeitungszentrum zweckmäßigerweise mit einem Werkstückträgermagazin 57 ausgestattet, das an geeigneter Stelle neben dem Sockel 1 angeordnet ist. In ihm werden Werkstückträger mit unterschiedlich gestalteter Spannvorrichtung 25 bereit gehalten. Der Werkstückträgerwechsel geschieht zweckmäßigerweise maschinell, weshalb das beispielsgemäße Bearbeitungszentrum über eine geeignete Werkstückträger-Wechselvorrichtung 58 verfügt. Sie ermöglicht es, denn momentan an der Positioniereinrichtung 16 in einer Arbeitsstellung 61 angeordneten Werkstückträger 15 aus dieser Arbeitsstellung 61 zu entfernen und stattdessen einen anderen Werkstückträger 15' an die dann unbestückte Positioniereinrichtung 16 anzukuppeln, so daß dieser neue Werkstückträger 15' die aus Figuren 1 bis 5 ersichtliche Arbeitsstellung 61 einnimmt. Zweckmäßigerweise über-nimmt die Werkstückträger-Wechselvorrichtung 58 zumindest teilweise auch das Verlagern der Werkstückträger 15, 15' in das und aus dem Werkstückträger-Magazin 57.

Beim Ausführungsbeispiel ist die Werkstückträger-Wechselvor-richtung 58 im Bereich des rechten Seitenrandes 34 des Sockels 1 angeordnet. Sie besitzt einen Halter 62, der über einen Horizontalschlitten 63 auf einer sich horizontal und linear erstreckenden Schlittenführung 64 gemäß Doppelpfeil 65 parallel zu der zweiten horizontalen Bewegungsrichtung 18 verfahrbar ist. Die Schlittenführung 64 ist zweckmäßigerweise an dem Sockel 1 angeordnet. An dem Halter 62 sind zwei Bestückungsplätze 66, 67 vorgesehen, die jeweils zur losbaren Aufnahme bzw. Halterung eines Werkstückträgers 15, 15' geeignet sind. Der beispielsgemäße Halter 62 ist gabelähnlich gestaltet und verfügt über zwei nebeneinander angeordnete, die Bestückungsplätze 66, 67 bildende Ausnehmungen, die zur Vorderseite des Halters hin offen sind. Um einen Werkstückträger in einem Bestückungsplatz 66, 67 zu haltern, wird besagter Werkstückträger 15 von der offenen Vorderseite her in den betreffenden Bestückungsplatz 67 gemäß Pfeil 72 eingeschoben. Das Entnehmen eines gehalterten Werkstückträgers erfolgt durch Herausziehen aus dem betreffenden Bestückungsplatz 67 in entgegengesetzter Richtung gemäß Pfeil 73. Die Einschiebe- und Herausziehrichtungen 72, 73 verlaufen parallel zu der horizontalen Bewegungsrichtung 65 des Halters 62.

Der Halter 62 ist so angeordnet, daß die offene Vorderseite der Bestückungsplätze 66, 67 zur Sockelrückseite weist. Der Werkstückträgerwechsel gestaltet sich wie folgt:

Einer der Bestückungsplätze 66 bleibt unbestückt, während der andere Bestückungsplatz 67 mit dem neuen Werkstückträger 15' bestückt ist. Das Bestücken geschieht in einer Grundstellung 71, in der der Horizontalschlitten 63 im vorderen Sockelbereich angeordnet ist, wie es etwa die Figur 4 zeigt. Nun wird der in Arbeitsstellung 61 befindliche Werkstückträger 15 mittels der Positioniereinrichtung 16 derart positioniert, daß er dem unbestückten Bestückungsplatz 66 horizontal unmittelbar gegenüberliegt. Diese Zwischenposition ist in Figur 5 gezeigt. Als nächstes wird der Horizontalschlitten 63 in Richtung des Werkstückträgers 15 gemäß Pfeil 74 verfahren, so daß der Werkstückträger 15 in den unbestückten Bestückungsplatz 66 eingeführt wird. Diese Zwischenstellung ist in Figur 5 bei 75 strichpunktiert angedeutet. Der im zweiten Bestückungsplatz 67 fixierte neue Werkstückträger 15' liegt dabei in horizontaler Bewegungsrichtung 6 neben dem zu entfernenden Werkstückträger 15.

Nun wird die Kupplungseinrichtung 14 entriegelt und der Drehteller 11 in horizontaler Bewegungsrichtung 6 unter Beibehaltung seiner Höhe in Richtung des neuen Werkstückträgers 15' verlagert, wobei der bisher in Arbeitsstellung 61 befindliche Werkstückträger 15 im ersten Bestückungsplatz 66 zurückbleibt. Bei dieser Seitwärtsbewegung wird der Kupplungseingriff mit dem bisherigen Werkstückträger 15 allmählich aufgehoben, während gleichzeitig ein allmählicher Kupplungseingriff mit dem neuen Werkstückträger 15' erfolgt, bis dieser die Arbeitsstellung 61 einnimmt. Nun wird die Kupplungseinrichtung 14 wieder verriegelt und der neue Werkstückträger 15' ist fest am Drehteller 11 fixiert.

Um diesen Bewegungsablauf zu gewährleisten, verfügt die Kupplungseinrichtung 14 beim Ausführungsbeispiel über eine Linearführung 76, die sich aus zwei komplementären Linearführungstei len 77, 77' zusammensetzt, welche relativ zueinander in Längsrichtung verschiebbar sind, im übrigen jedoch ineinandergreifen. Eines dieser Linearführungspfeile 77 ist am Drehteller 11, das andere an der Aufspannplatte 47 vorgeesehen. Die Linearführung 76 kann zum Beispiel als Schwalbenschwanzführung oder wie abgebildet als T-Führung ausgebildet sein. Die einzelnen Verriegelungselemente zur Verriegelung der jeweiligen Arbeitsstellung 61 sind in der Zeichnung nicht abgebildet.

Nachdem der neue Werkstückträger 15' in der Arbeitsstellung 61 fixiert ist, wird der Halter 62 über den Horizontalschlitten 63 aus der Zwischenstellung 75 in die Grundstellung 71 zurückgefahren. Dabei bleibt der neue Werkstückträger 15' am Drehteller 11 zurück, während der alte Werkstückträger 15 im zugeordneten Bestückungsplatz 66 verbleibt und ebenfalls mit zurückbewegt wird. Nun kann das Bearbeitungszentrum die Bearbeitung des neuen Werkstücktyps unter Verwendung des neuen Werkstückträgers 15' aufnehmen.

In bevorzugter Ausgestaltung ist der zum Beispiel gabelähnlich E-förmig konturierte Halter 62 wie abgebildet zwischen einer in Figur 4 in durchgezogenen Linien dargestellten Wechselstellung 81 und einer in strichpunktierten Linien dargestellten Beschickungsstellung 82 verschwenkbar, wobei die Schwenkachse 78 zweckmäßigerweise eine Horizontalachse ist. In der Wechselstellung 81 nimmt der Halter 62 die oben beschriebene Position ein, in der die Bestückungsplätze 66, 67 mit ihrer offenen Vorderseite zur Sockelrückseite weisen. Damit der Halter 62 und der daran festgelegte Werkstückträger beim Bearbeitungsvorgang nicht stören, kann der Halter 62 um die horizontale Schwenkachse 78 gemäß Doppelpfeil 83 in die Beschickungsstellung 82 verschwenkt werden, wobei der Schwenkwinkel beispielsgemäß 180° beträgt. Der Halter 62 ist dadurch dem Werkstückträger-Magazin 57 zugewandt und der alte Werkstückträger 15 kann in das Werkstückträger-Magazin 57 eingelagert werden. Ebenso kann in der Beschickungsstellung 83 der als nächstes vorgesehene Werkstückträger an einem der Bestückungsplätze 66, 67 gehaltert werden.

Bei einer Anordnung der Arbeitseinheiten 22, 22', 22'' wie sie in Figur 6 gezeigt ist, kann es empfehlenswert sein, die Werkstückträger-Wechselvorrichtung 58 im Bereich des entgegengesetzten linken Seitenrandes 31 des Sockels 1 zu positionieren. Dieser Bereich ist hier frei, da die Arbeitseinheiten 22', 22'' im vorderen Bereich des Bearbeitungszentrums angeordnet sind. Um einen optimalen Werkstückträgerwechsel vornehmen zu können, sollte in diesem Falle die erste Horizontalführung 4 allerdings soweit nach links verlängert sein, daß sich der Hubschlitten 8 in Tiefenrichtung 18 gegenüber der werkstückträger-Wechselvorrichtung 58 positionieren läßt.

Aus Figur 8 geht eine weitere Bauform des Bearbeitungszentrums in Seitenansicht analog Pfeil III hervor, die einen besonders kostengünstigen Werkstückträger-Wechsel ermöglicht. Der Wechselvorgang erfolgt hier in einer Werkstückträger-Wechselstation 92, die von einer Zuführeinrichtung 93 durchlaufen wird, mit der der jeweils nicht mehr benötigte Werkstückträger 15 abtransportiert und der als nächstes in der Arbeitsstellung an der Positioniereinrichtung 16 bzw. dem Drehteller 11 festzulegende Werkstückträger 15' zugeführt wird. In bevorzugter Ausgestaltung gemäß dem Ausführungsbeispiel ist die Werkstückträger-Wechselstation 92 mit der Werkstück-Wechselstation 35 identisch und die Zuführeinrichtung 93 ist die Werkstück-Fördereinrichtung 45, 45'. Auf letzterer sind zusätzlich zu den Positioniermitteln 46 für Werkstücke 26 mehrere Haltevorrichtungen 94 angeordnet, an denen sich jeweils ein Werkstückträger 15, 15' derart festlegen läßt, daß er beim Durchlaufen der Werkstückträger-Wechselstation 92 eine Lage einnimmt, die für den Wechsel geeignet ist. Bevorzugt ist der in einer Haltevorrichtung 94 festgelegte Werkstückträger 15' derart angeordnet und ausgerichtet, daß die Spannvorrichtung 25 nach unten weist, die Plattenebene der Aufspannplatte 47 in einer Horizontalebene verläuft und das Linearführungsteil 77' zweckmäßigerweise in Vorschubrichtung 95 der Zuführeinrichtung 93 ausgerichtet ist. Die Haltevorrichtung 94 arbeitet zweckmäßigerweise mit der Spannvorrichtung zusammen.

Um die unbestückte Positioniereinrichtung 16 mit einem Werkstückträger 15' zu bestücken, wird die Positioniereinrichtung 16 zweckmäßigerweise derart in der Werkstückträger-Wechselstation 92 positioniert, daß das an ihr vorgesehene Linearführungsteil 77 auf einer Höhe mit dem Linearführungsteil 77' des ankommenden Werkstückträgers 15' liegt und ebenfalls in Vorschubrichtung 95 ausgerichtet ist. Die laufende Zuführeinrichtung 93 schiebt dann den ankommenden Werkstückträger 15' automatisch mit seinem Linearführungsteil 77' auf das Linearführungsteil 77 am Drehteller 11. Ist die gewünschte Arbeitsstellung erreicht, wird die im Detail nicht näher dargestellte Kupplungseinrichtung 14 betätigt und der Werkstückträger 15' durch Hochfahren des Drehtellers 11 von der Haltevorrichtung 94 abgehoben.

In entsprechender Weise kann ein nicht mehr benötigter Werkstückträger 15 in der Werkstückträger-Wechselstation 92 an eine Haltevorrichtung 94 abgegeben werden. Zweckmäßigerweise setzt die Positioniereinrichtung 16 den Werkstückträger 15 unmittelbar in eine Haltevorrichtung 94 ein. Anschließend wird die Kupplungseinrichtung 14 gelöst, so daß die laufende Zuführeinrichtung 93 den Werkstückträger 15 von dem Linearführungsteil 77 abzieht. Gleichzeitig kann hierbei bereits der nächste Werkstückträger 15' aufgeschoben werden.

Es versteht sich, daß der Werkstückträger-Wechsel, vor allem in Abhängigkeit von der Ausgestaltung der Kupplungseinrichtung 14, auch mit anderen Bewegungsabläufen koordiniert werden kann. Beispielsweise wäre es denkbar, das Ein- und Ausfädeln der Linearführungsteile 77, 77' im rechten Winkel zu der Vorschubrichtung 95, d.h. in der ersten horizontalen Bewegungsrichtung 6 auszuführen. Dann müßten die Werkstückträger 15, 15' und der Drehteller 11 im Vergleich zur Figur 8 um 90° bezüglich der Vertikalachse gedreht angeordnet werden. Die Positioniereinrichtung 16 würde dann zweckmäßigerweise zunächst den nicht mehr benötigten Werkstückträger 15 auf die Zuführeinrichtung 93 absetzen und dann ein Stück zurückfahren, damit der "neue" Werkstückträger 15' an den Wechselplatz gelangen und vom Drehteller aufgenommen werden kann.

Bei entsprechender Ausgestaltung der Kupplungseinrichtung 14, beispielsweise ohne die Linearführungsteile 77, 77', könnte der Wechselvorgang auch ohne weiteres ausschließlich im Rahmen einer Vertikalbewegung des Drehtellers durchgeführt werden. Der nicht mehr benötigte Werkstückträger 15 wird an einem Wechselplatz von oben her auf die Zuführeinrichtung 93 abgesetzt und nach dem Entkuppeln abtransportiert. Anschließend wird der nächste Werkstückträger 15' zum Wechselplatz gefördert, von oben durch die Positioniereinrichtung 16 angekuppelt und abgehoben.

Von Vorteil ist bei dieser Bauform jedenfalls, daß auf eine aufwendige spezielle Werkstückträger-Wechselvorrichtung 58 verzichtet werden kann, weil der Werkstückträger-Wechsel durch die Positioniereinrichtung 16 selbst unter Verwendung der sowieso vorhandenen Werkstück-Fördereinrichtung 45, 45' ausgeführt werden kann. Man braucht beispielsweise lediglich im Anschluß an das letzte zu bearbeitende Werkstück 26 auf der Werkstück-Fördereinrichtung 45, 45' den als nächstes zu verwendenden Werkstückträger 15 anzuordnen, so daß im Anschluß an den letzten Werkstückwechsel, ebenfalls im Pick-up-System ein Werkstückträger-Wechsel ausgeführt werden kann.

Es ist sogar möglich, den Werkstückträger-Wechsel bei an der Spannvorrichtung 25 festgelegtem Werkstück auszuführen. In diesem Falle werden die Werkstückträger 15 über das betreffende Werkstück 26 an der Werkstück-Fördereinrichtung 45, 45' gehalten und die Haltevorrichtungen 94 sind praktisch von den Positioniermitteln 46 gebildet, die mittelbar, über das zugeordnete Werkstück 26, auch den betreffenden Werkstückträger halten.

Das beispielsgemäße Bearbeitungszentrum ermöglicht eine Werkstückbearbeitung mit nur einem Werkstückträger und lediglich einer daran angeordneten, insbesondere hydraulisch oder pneumatisch betätigten Spannvorrichtung. Die nicht in Bearbeitung befindlichen Werkstücke brauchen nicht in aufwendigen und teuren Spannvorrichtung gehalten werden, sondern können mit einfachen Fördermitteln zur Werkstück-Wechselstation zugeführt bzw. aus dieser abgeführt werden. Es genügen einfache Positioniermittel, um eine gewisse Grundausrichtung zu gewährleisten, die dafür sorgt, daß die am Werkstück-Bereitstellungsplatz 37 ankommenden Werkstücke stets die gleiche Ausrichtung haben, die ein unmittelbares Ergreifen durch die Spannvorrichtung des in Höhenrichtung verlagerbaren Werkstückträgers 15 gestattet. Das Bearbeitungszentrum ermöglicht eine vollautomatische Werkstückbearbeitung ohne Bedienpersonal für den werkstückwechsel. Der Werkstückträger holt sich die zu bearbeitenden Werkstücke selbst ab und spannt sie auch selbst in die Trägerstellung.

Es versteht sich, daß das Bearbeitungszentrum ohne weiteres noch mit weiteren Bewegungsfreiheitsgraden bzw. Achsen ausgestattet sein kann. Beispielsweise wäre es denkbar, den Werkstückträger 15 oder den Drehteller 11 nochmals zu unterteilen und die beiden Teile mit einer quer zur vertikalen Achse 12 verlaufenden Querachse miteinander zu verknüpfen, wobei die Querachse schräg, d.h. nicht rechtwinkelig zur vertikalen Achse 12 verlaufen kann. Dadurch läßt sich die Spannvorrichtung 25 bei Bedarf während der Bearbeitung auch derart positionieren, daß sie nicht nach vertikal unten, sondern (auch) seitwärts weist, wobei die beim Werkzeugwechsel nach unten weisenden Plattenfläche 48 seitwärts weist.

Aus der Figur 7 geht eine modifizierte Anordnung des Werkstückträgers 15 hervor. Er sitzt hier nicht unmittelbar an dem oben erwähnten Drehteller 11, sondern an einem zweiten Drehteller 85, der über einen Winkelkopf 86 an dem besagten ersten Drehteller 11 festgelegt ist. Der zweite Drehteller 85 ist um eine rechtwinklig zu der vertikalen Achse 12 verlaufende horizontale Drehachse 87 bezüglich dem Winkelkopf 86 drehbar, der seinerseits um die vertikale Achse 12 drehbar ist. Der Werkstückträger 15 ist über seine Aufspannplatte 47 über eine Kupplungseinrichtung 14 der oben beschriebenen Art lösbar an dem zweiten Drehteller 85 festgelegt, während der Winkelkopf 46 über eine entsprechende Kupplungseinrichtung 14 mit dem ersten Drehteller 11 fest verbunden ist. Der Werkstückträger 15 läßt sich nun zusätzlich gemäß Doppelpfeil 88 um die horizontale Drehachse 87 drehen. Dies macht es möglich, praktisch jeden Raumwinkel bearbeiten zu können und eine Fünfseitenbearbeitung des Werkstückes 26 zu verwirklichen.

Der Werkstückträger 15 ist dabei derart ausgerichtet, daß die Plattenebene der Aufspannplatte 47 horizontal ausgerichtet ist und die Plattenfläche 48 mit der daran angeordneten Spannvorrichtung 25 horizontal seitwärts weist.

Um bei einer derartigen Anordnung bzw. Ausrichtung des Werkstückträgers 15 ein jeweiliges zu bearbeitendes Werkstück in der Werkstück-Wechselstation 35 aufzunehmen, wird das am Werkstück-Bereitstellungsplatz 37 befindliche Werkstück von der Seite her durch die Spannvorrichtung 25 erfaßt. Der Werkstückträger 15 wird durch die Positioniereinrichtung 16 in die Werkstück-Wechselstation 35 verbracht, anschließend abgesenkt, bis er seitlich neben dem aufzunehmenden Werkstück 26 angeordnet ist, und dann durch eine horizontale Seitwärtsbewegung an das Werkstück 26 herangefahren, das wiederum durch die Spannvorrichtung 25 selbst ergriffen wird. Nun wird der Werkstückträger 15 durch die Positioniereinrichtung 16 angehoben und das Werkstück 26 in die Bearbeitungszone verbracht. Das Absetzen des Werkstückes 26 nach der Bearbeitung erfolgt in entsprechender Weise.

## Patentansprüche

1. Bearbeitungszentrum zur mechanischen Bearbeitung von Werkstücken (26), mit mindestens einer Arbeitseinheit (22, 22', 22''), die mindestens eine zu einer Rotationsbewegung antreibbare Arbeitsspindel (23) aufweist, die mit einem Bearbeitungswerkzeug (24) bestückbar ist, mit dem mindestens ein in einer Bearbeitungszone (28) angeordnetes Werkstück (26) bearbeitet werden kann, mit einem Werkstückträger (15), der eine Spannvorrichtung (25) zum lösbaren Festspannen des Werkstückes (26) aufweist, wobei die Arbeitseinheit (22, 22', 22'') und der Werkstückträger (15) relativ zueinander verfahrbar sind, mit einer Positioniereinrichtung (16) für den Werkstückträger (15), durch die der Werkstückträger (15) zwischen der Bearbeitungszone (28) und einer außerhalb der Bearbeitungszone (28) befindlichen Werkstück-Wechselstation (35) verfahrbar ist, und mit einem Greifer für den Wechsel von zu bearbeitenden und bereits bearbeiteten Werkstücken (26), wobei der Greifer das Werkstück (26) von einem Werkstück-Bereitstellungsplatz (37) in der Werkstück-Wechselstation (35) von oben oder von der Seite her aufnimmt, hochhebt und in die Bearbeitungszone (28) verbringt und nach der Bearbeitung an einem Werkstück-Ablageplatz (38) in der Werkstück-Wechselstation (35) von oben oder von der Seite her absetzt, wobei die Spannvorrichtung (25) des Werkstückträgers (15) den Greifer bildet und das Werkstück (26) in Bearbeitungseingriff bringt, und wobei das jeweils zu bearbeitende Werkstück (26) von der Aufnahme bis zum erneuten Absetzen in der Werkstück-Wechselstation, und somit auch während der dazwischenliegenden Bearbeitung durch das an der rotierenden Arbeitsspindel (23) der Arbeitseinheit (22, 22', 22'') angeordnete Bearbeitungswerkzeug (24), ständig an der Spannvorrichtung (25) verbleibt, dadurch gekennzeichnet, daß der Werkstückträger (15) eine Palette (47) enthält, an der die Spannvorrichtung (25) vorgesehen ist, daß der Werkstückträger (15) gemeinsam mit der Spannvorrichtung (25) auswechselbar an der Positioniereinrichtung (16) angeordnet ist, und daß eine Werkstückträger-Wechselstation (92) vorhanden ist, in der die Positioniereinrichtung (16) den für einen Bearbeitungsvorgang benötigten Werkstückträger (15') von einer Zuführeinrichtung (93) aufnimmt.

2. Bearbeitungszentrum nach Anspruch 1, dadurch gekennzeichnet, daß der Werkstück-Bereitstellungsplatz (37) mit dem Werkstück-Ablageplatz (38) identisch ist.

3. Bearbeitungszentrum nach Anspruch 1 oder 2, dadurch gekennzeichnet, daß eine Werkstück-Fördereinrichtung (45, 45') zum Zuführen und/oder Abführen zu bearbeitender bzw. bereits bearbeiteter Werkstücke (26) in die bzw. aus der Werkstück-Wechselstation (35) vorgesehen ist, die zum Beispiel als Förderband oder als Rundschalttisch ausgebildet ist.

4. Bearbeitungszentrum nach einem der Ansprüche 1 bis 3, dadurch gekennzeichnet, daß unterhalb der Bearbeitungszone (28) ein Späneauffangschacht (53) vorgesehen ist.

5. Bearbeitungszentrum nach einem der Ansprüche 1 bis 4, dadurch gekennzeichnet, daß die Drehachse (32) der Arbeitsspindel (23) von mindestens einer Arbeitseinheit (22, 22', 22'') horizontal ausgerichtet ist.

6. Bearbeitungszentrum nach einem der Ansprüche 1 bis 5, dadurch gekennzeichnet, daß mindestens zwei nebeneinander angeordnete und unabhängig voneinander betreibbare Arbeitseinheiten (22', 22'') vorhanden sind.

7. Bearbeitungszentrum nach einem der Ansprüche 1 bis 6, dadurch gekennzeichnet, daß der Werkstückträger (15) über eine Linearführung (76) an der Positioniereinrichtung (16) gelagert ist, wobei er zum Auswechseln längs dieser Linearführung (76) verschoben wird.

8. Bearbeitungszentrum nach einem der Ansprüche 1 bis 7, dadurch gekennzeichnet, daß eine Werkstückträger-Wechselvorrichtung (58) vorhanden ist.

9. Bearbeitungszentrum nach Anspruch 8, dadurch gekennzeichnet, daß die Werkstückträger-Wechselvorrichtung (58) einen insbesondere gabelartigen Halter (62) mit zwei Bestückungsplätzen (66, 67) für Werkstückträger (15, 15') aufweist.

10. Bearbeitungszentrum nach Anspruch 9, dadurch gekennzeichnet, daß der Halter (62) in Richtung zu dem an der Positioniereinrichtung (16) angeordneten Werkstückträger (15) und in Gegenrichtung verschiebbar ist (Doppelpfeil 65).

11. Bearbeitungszentrum nach Anspruch 9 oder 10, dadurch gekennzeichnet, daß der Halter (62) zwischen einer Wechselstellung und einer Beschickungsstellung (63) insbesondere um eine Horizontalachse (78) verschwenkbar ist.

12. Bearbeitungszentrum nach einem der Ansprüche 8 bis 11, dadurch gekennzeichnet, daß der Werkstückträger-Wechselvorrichtung (58) ein Werkstückträger-Magazin (57) für Werkstückträger (15, 15') mit unterschiedlichen Spannvorrichtungen (25) zugeordnet ist.

13. Bearbeitungszentrum nach einem der Ansprüche 1 bis 12, dadurch gekennzeichnet, daß die Positioniereinrichtung (16) den nicht mehr benötigten Werkstückträger (15) auf die Zuführeinrichtung (93) zurücklegt.

14. Bearbeitungszentrum nach einem der Ansprüche 1 bis 13, dadurch gekennzeichnet, daß die Werkstückträger-Wechselstation (92) mit der Werkstück-Wechselstation (35) identisch ist, wobei die Zuführeinrichtung (93) von der Werkstück-Fördereinrichtung (45, 45') gebildet ist.

15. Bearbeitungszentrum nach Anspruch 14, dadurch gekennzeichnet, daß an der Werkstück-Fördereinrichtung (45, 45') mindestens eine Haltevorrichtung (94) für zu- und/oder abzuführende Werkstückträger (15, 15') vorgesehen ist.

16. Bearbeitungszentrum nach einem der Ansprüche 1 bis 15, dadurch gekennzeichnet, daß der Werkstückträger (15) über die ihn tragende Positioniereinrichtung (16) in vertikalrichtung (7) und in einer ersten horizontalen Bewegungsrichtung (6) verfahrbar ist und daß die Arbeitseinrichtung (22) in einer zu diesen Richtungen senkrechten zweiten horizontalen Bewegungsrichtung (18) verfahrbar ist, wobei der Werkstückträger (15) zweckmäßigerweise ferner um eine Vertikalachse (12) verdrehbar ist.

17. Bearbeitungszentrum nach einem der Ansprüche 1 bis 16, dadurch gekennzeichnet, daß der mindestens einen Arbeitseinheit (22, 22', 22'') ein Werkzeugspeicher (55) und ein Werkzeugwechsler (56) zugeordnet ist.

## Claims

1. Machining centre for the mechanical machining of workpieces (26) with at least one machining unit (22, 22', 22'') having at least one work spindle (23) capable of being driven to perform a rotary motion and of being fitted with a machining tool (24) for the machining of at least one workpiece (26) located in the machining zone (28), with a work holding fixture (15) having a chucking device (25) for the releasable clamping of the workpiece (26), the machining unit (22, 22', 22'') and the work holding fixture (15) being capable of traversing relative to one another, with a positioning device (16) for the work holding fixture (15), by means of which the work holding fixture (15) can be moved between the machining zone (28) and a workpiece changing station (35) lying outside the machining zone (28), and with a gripper for changing workpieces (26) to be machined and machined workpieces (26), said gripper picking up the workpiece (26) from a workpiece disposition point (37) in the workpiece changing station (35) from above or from the side, raising and moving it into the machining zone (28) and, after machining, placing it at a workpiece deposition point (38) in the workpiece changing station (35) from above or from the side, the chucking device (25) of the work holding fixture (15) forming the gripper and bringing the workpiece (26) into machining contact, and the workpiece (26) to be machined remaining at the chucking device (25) from the time it is picked up to the time it is replaced in the workpiece changing station and thus during the duration of its machining by the machining tool (24) located on the rotating work spindle (23) of the machining unit (22, 22', 22''), characterized in that the work holding fixture (15) incorporates a pallet (47) on which the chucking device (25) is provided, in that the work holding fixture (15) is, together with the chucking device (25), interchangeably located on the positioning device (16), and in that a changing station (92) for work holding fixtures is provided, where the positioning device (16) picks up the work holding fixture (15') required for a machining process from a feeding device (93).

2. Machining centre according to claim 1, characterized in that the workpiece disposition point (37) is identical with the workpiece deposition point (38).

3. Machining centre according to claim 1 or 2, characterized in that work handling equipment (45, 45') for supplying and/or removing workpieces (26) to be machined and/or machined workpieces (26) to and/or from the workpiece changing station (35) is provided, this being, for instance, designed as a conveyor belt or a rotary indexing table.

4. Machining centre according to any of claims 1 to 3, characterized in that a swarf collection pit (53) is provided below the machining zone (28).

5. Machining centre according to any of claims 1 to 4, characterized in that the axis (32) of the work spindle (23) of at least one machining unit (22, 22', 22'') is horizontal.

6. Machining centre according to any of claims 1 to 5, characterized in that at least two machining units (22', 22'') capable of independent operation are provided side by side.

7. Machining centre according to any of claims 1 to 6, characterized in that the work holding fixture (15) is mounted on the positioning device (16) by way of a linear guide (76) and traversed along said linear guide (76) for exchange,

8. Machining centre according to any of claims 1 to 7, characterized in that a changing device (58) for work holding fixtures is provided.

9. Machining centre according to claim 8, characterized in that the changing device (58) for work holding fixtures has an in particular forked holder (62) with two fitting points (66, 67) for work holding fixtures (15, 15').

10. Machining centre according to claim 9, characterized in that the holder (62) is capable of traversing towards the work holding fixture (15) located on the positioning device (16) and in the opposite direction (double-headed arrow 65).

11. Machining centre according to Claim 9 or 10, characterized in that the holder (62) is capable of swivelling, in particular about a horizontal axis (78), between a changing position and a feed position (63).

12. Machining centre according to any of claims 8 to 11, characterized in that a magazine (57) for work holding fixtures (15, 15') with different chucking devices (25) is allocated to the changing device (58) for work holding fixtures.

13. Machining centre according to any of claims 1 to 12, characterized in that the positioning device (16) replaces the work holding fixture (15) which is no longer required on the feeding device (93).

14. Machining centre according to any of claims 1 to 13, characterized in that the changing station (92) for work holding fixtures is identical with the workpiece changing station (35), the feeding device (93) being represented by the work handling equipment (45, 45').

15. Machining centre according to claim 14, characterized in that at least one holding device (94) for work holding fixtures (15, 15') to be supplied and/or removed is provided on the work handling equipment (45, 45').

16. Machining centre according to any of claims 1 to 15, characterized in that the work holding fixture (15) is capable of traversing in the vertical direction (7) and in a first horizontal movement direction (6) by way of the positioning device (16) which supports it, and in that the machining unit (22) is capable of traversing in a second horizontal movement direction (18) at right angles to the above directions, the work holding fixture (15) being in addition expediently capable of swivelling about a vertical axis (12).

17. Machining centre according to any of claims 1 to 16, characterized in that a tool magazine (55) and a tool changer (56) are allocated to the at least one machining unit (22, 22', 22'').

## Revendications

1. Centre d'usinage destiné à l'usinage mécanique de pièces (26), comportant au moins une unité de travail (22, 22', 22''), qui présente au moins une broche de travail (23) entraînable dans un mouvement de rotation, laquelle peut être équipée d'un outil d'usinage (24), avec lequel au moins une pièce (26) disposée dans une zone d'usinage (28) peut être usinée, comportant un porte-pièce (15), qui présente un dispositif de serrage (25) pour le serrage non permanent de la pièce (26), l'unité de travail (22, 22', 22'') et le porte-pièce (15) étant déplaçables l'une par rapport à l'autre, comportant un dispositif de positionnement (16) pour le porte-pièce (15), par lequel le porte-pièce (15) est déplaçable entre la zone d'usinage (28) et un poste de changement de pièce (35) se trouvant à l'extérieur de la zone d'usinage (28), et comportant une pince pour le changement de pièces (26) à usiner et déjà usinée, la pince reprenant la pièce (26), à partir du haut ou du côté, d'un emplacement de préparation de pièce (37) dans le poste de changement de pièce (35), la soulevant et l'amenant dans la zone d'usinage (28) et, après usinage, la déposant à partir du haut ou du côté, en un emplacement de dépose de pièce (38) dans le poste de changement de pièce (35), le dispositif de serrage (25) du porte-pièce (15) constituant la pince et amenant la pièce (26) en position d'usinage, et la pièce (26) à usiner dans chaque cas restant en permanence sur le dispositif de serrage (25), depuis la reprise jusqu'à la nouvelle dépose dans le poste de changement de pièce, et donc aussi pendant l'usinage intermédiaire par l'outil d'usinage (24) disposé sur la broche de travail (23) rotative de l'unité de travail (22, 22', 22''), caractérisé en ce que le portepièce (15) contient une palette (47), sur laquelle est prévu le dispositif de serrage (25), en ce que le portepièce (15) est disposé sur le dispositif de positionnement (16), de manière à pouvoir être échangé conjointement avec le dispositif de serrage (25), et en ce qu'il est prévu un poste de changement de porte-pièce (92), dans lequel le dispositif de positionnement (16) reprend, d'un dispositif d'amenée (93), le porte-pièce (15') nécessaire pour une opération d'usinage.

2. Centre d'usinage selon la revendication 1, caractérisé en ce que l'emplacement de préparation de pièce (37) est identique à l'emplacement de dépose de pièce (38).

3. Centre d'usinage selon la revendication 1 ou 2, caractérisé en ce qu'un dispositif de convoyage de pièces (45, 45') est prévu pour l'amenée et/ou l'évacuation de pièces (26) à usiner ou déjà usinées respectivement dans le poste de changement de pièce ou à partir de celui-ci, qui est réalisé par exemple en tant que bande de convoyage ou de table à transfert circulaire.

4. Centre d'usinage selon l'une des revendications 1 à 3, caractérisé en ce qu'un puits de collecte de copeaux (53) est prévu au-dessous de la zone d'usinage (28).

5. Centre d'usinage selon l'une des revendications 1 à 4, caractérisé en ce que l'axe de rotation (32) de la broche de travail (23) d'au moins une unité de travail (22, 22', 22'') est orienté horizontalement.

6. Centre d'usinage selon l'une des revendications 1 à 5, caractérisé en ce que sont prévues au moins deux unités de travail (22', 22'') juxtaposées et pouvant fonctionner indépendamment l'une de l'autre.

7. Centre d'usinage selon l'une des revendications 1 à 6, caractérisé en ce que le porte-pièce (15) est monté sur le dispositif de positionnement (16), par l'intermédiaire d'un guidage linéaire (76), en étant déplacé le long de ce guidage linéaire (76) pour son échange.

8. Centre d'usinage selon l'une des revendications 1 à 7, caractérisé en ce qu'est prévu un dispositif de changement de porte-pièce (58).

9. Centre d'usinage selon la revendication 8, caractérisé en ce que le dispositif de changement de porte-pièce (58) comporte un support (62) en particulier du type fourche avec deux emplacements d'équipement (66, 67) pour des porte-pièces (15, 15').

10. Centre d'usinage selon la revendication 9, caractérisé en ce que le support (62) est déplaçable en direction du porte-pièce (15) disposé sur le dispositif de positionnement (16) et dans le sens contraire (double flèche 65).

11. Centre d'usinage selon la revendication 9 ou 10, caractérisé en ce que le support (62) peut pivoter entre une position d'échange et une position de chargement (63), en particulier autour d'un axe horizontal (78).

12. Centre d'usinage selon l'une des revendications 8 à 11, caractérisé en ce qu'un magasin de porte-pièces (57) pour des porte-pièces (15, 15') avec différents dispositifs de serrage (25) est affecté au dispositif de changement de porte-pièce (58).

13. Centre d'usinage selon l'une des revendications 1 à 12, caractérisé en ce que le dispositif de positionnement (16) replace le porte-pièce (15) qui n'est plus nécessaire sur le dispositif d'amenée (93).

14. Centre d'usinage selon l'une des revendications 1 à 13, caractérisé en ce que le poste de changement de porte-pièce (92) est identique au poste de changement de pièce (35), le dispositif d'amenée (93) étant constitué par le dispositif de convoyage de pièces (45, 45').

15. Centre d'usinage selon la revendication 14, caractérisé en ce qu'au moins un dispositif de maintien (94) pour des porte-pièces (15, 15') à amener et/ou à évacuer est prévu sur le dispositif de convoyage de pièces (45, 45').

16. Centre d'usinage selon l'une des revendications 1 à 15, caractérisé en ce que le porte-pièce (15) est déplaçable dans la direction verticale (7) et dans une première direction de déplacement horizontale (6), par le dispositif de positionnement (16) qui le porte, et en ce que le dispositif de travail (22) est déplaçable dans une deuxième direction de déplacement horizontale (18), perpendiculaire à ces directions, le porte-pièce (15) pouvant avantageusement tourner en outre autour d'un axe vertical (12).

17. Centre d'usinage selon l'une des revendications 1 à 16, caractérisé en ce qu'un stockeur d'outil (55) et un échangeur d'outil (56) sont affectés à l'unité de travail ou aux unités de travail (22, 22', 22'').
